Europäisches Patentamt

European Patent Office

Office européen des brevets

(11) Veröffentlichungsnummer: **0 504 543 A1**

## (12) EUROPÄISCHE PATENTANMELDUNG

(21) Anmeldenummer: **92100226.7**

(22) Anmeldetag: **09.01.92**

(51) Int. Cl.⁵: **B65D 43/06**

(30) Priorität: **15.02.91 DE 9101771 U**

(43) Veröffentlichungstag der Anmeldung:
**23.09.92 Patentblatt 92/39**

(84) Benannte Vertragsstaaten:
**AT BE CH DE DK ES FR GB GR IT LI LU NL PT
SE**

(71) Anmelder: **VITRI CORNING GmbH & CO KG
Rheinstrasse 39
W-6109 Mühltal 1(DE)**

(72) Erfinder: **Wenz, Rainer
Am hohen Rain 19
W-6105 Ober-Ramstadt(DE)**

(74) Vertreter: **Zinngrebe, Horst, Dr.rer.nat.
Saalbaustrasse 11
W-6100 Darmstadt(DE)**

(54) **Haushaltsdose mit Deckel.**

㊗ Beschrieben wird eine Haushaltsdose mit Dekkel, wobei ein umlaufender Dosenrand von einem umlaufenden, sich aus einem Deckel-Mittelteil erhebenden Deckel-Randwulst übergriffen ist. Damit die Haushaltsdose geringe Herstellungskosten verursacht, im täglichen Gebrauch leicht handhabbar ist und sich einfach reinigen läßt, ist vorgesehen, daß der Dosenrand (12) relativ zu einer Dosenseitenwand (10) nach außen und unten umgebogen ist und daß der auf dem Dosenrand wenigstens teilweise flächig aufliegende Randwulst (34) an seinem unteren Ende wenigstens eine einwärts vorspringende Rippe (42) oder Nocken aufweist, welche bei dichtendem Verschluß der Dose eine am Dosenrand ausgebildete Schulter (16) unterfassen.

Fig. 4

EP 0 504 543 A1

Die Erfindung betrifft eine Haushaltsdose mit Deckel, wobei ein umlaufender Dosenrand von einem umlaufenden, sich aus einem Deckel-Mittelteil erhebenden Deckel-Randwulst übergriffen ist.

Bei dem in der deutschen Gebrauchsmusterschrift 78 20 427 dargestellten Kunststoffbehälter zum Aufbewahren von Nahrungsmitteln ist der Behälterrand das obere, stumpfe Ende der Behälterseitenwand. Da letztere nach außen und oben schräg verläuft, weist der Deckel-Randwulst eine umlaufende, im Querschnitt eckige Nut auf, in welche der Behälterrand beim Verschließen des Behälters das Innere des Behälters nach außen abdichtend eintaucht.

Der offene Behälter läßt sich indes nur dadurch sicher von Hand ergreifen, daß der Behälter wenigstens teilweise auch von innen erfaßt wird. Ist der offene Behälter mit Lebensmitteln, wie beispielsweise Pudding oder dergleichen hoch gefüllt, wird das Hineingreifen in das Innere des Behälters zu Handhabungszwecken als unästhetisch empfunden.

Es ist daher beispielsweise in der deutschen Offenlegungsschrift 34 35 636 ein Haushaltsbehälter vorgeschlagen worden, bei welchem in der Behälterrandnähe eine radial abstehende umlaufende Griffleiste ausgebildet ist. Eine derartige Griffleiste erfordert eine relativ aufwendige Form bei der Herstellung des Behälters und setzt aus Stabilitätsgründen außerdem eine gewisse Mindest-Materialstärke voraus. Wenn man andererseits bei Haushaltsdosen zu dünneren Wandstärken übergeht, erfordert eine umlaufende Griffleiste spezielle Verstärkungselemente, welche den Kostenaufwand für die Herstellung einer derartigen Dose in die Höhe treiben und außerdem das Sauberhalten der Dose im Gebrauch erschweren.

Der Erfindung liegt daher die Aufgabe zugrunde, eine Haushaltsdose mit Deckel zu schaffen, die geringe Herstellungskosten verursacht, im täglichen Gebrauch leicht handhabbar ist und sich einfach reinigen läßt.

Bei der eingangs genannten Haushaltsdose mit Deckel ist dazu erfindungsgemäß vorgesehen, daß der Dosenrand relativ zur Dosenseitenwand nach außen und unten umgebogen ist und daß der auf dem Deckelrand wenigstens teilweise flächig aufliegende Randwulst an seinem unteren Ende wenigstens eine einwärts vorspringende Rippe oder Nocken aufweist, welche bei dichtendem Verschluß der Dose eine Schulter am Dosenrand unterfassen. Dose und Deckel lassen sich preiswert mit einfachen Formen und relativ geringer Wandstärke herstellen. Separate Griffleisten sind nicht erforderlich, weil die Dose durch Ergreifen des umgebogenen Dosenrandes leicht transportierbar ist. Ferner weisen Dose und Deckel keine schwer zugänglichen Nischen oder Ecken auf, so daß Dose und Deckel pflegeleicht saubergehalten werden können. Durch den Formenschluß zwischen Deckelnut und Dosenrand ergibt sich eine radial breite Dichtfläche, wobei der dichte Verschluß durch Einschnappen der Rippe unter die Schulter hörbar signalisiert wird.

Zwar ist es aus der US-Patentschrift 4,341,324 bekannt, den Dosenrand nach außen etwa rechtwinklig umzubiegen. Jedoch wird das Abdichten des Doseninneren durch zwei hintereinander liegende Dichtlinien angestrebt, was in der praktischen Handhabung jedoch schwer zu realisieren ist.

In bevorzugter Ausgestaltung der Erfindung sind der Dosenrand und die Nut des Randwulstes im Querschnitt jeweils kreisbogenförmig ausgestaltet, wobei der Krümmungsradius der dichtend wirkenden Oberfläche des Dosenrandes gleich dem Krümmungsradius der dichtend wirkenden Innenfläche der Nut ist.

Als Schulter am Dosenrand kann zweckmäßig das äußere Ende des Dosenrandes dienen, wenn die Rippe am äußeren Ende der Nut des Ringwulstes ausgebildet ist. Der Anpreßdruck eines Teils der Innenfläche der Nut auf die Außenfläche des Dosenrandes wird erhöht, wenn in Weiterbildung der Erfindung am inneren Ende der Nut eine umlaufende, nach innen vorstehende Verdickung vorgesehen ist, die beim Aufdrücken des Deckels auf den Dosenrand gegen den Übergangsbereich des Dosenrandes zur Dosenseitenwand anliegt.

Die Erfindung wird nachstehend anhand des in der beigefügten Zeichnung dargestellten Ausführungsbeispiels im einzelnen beschrieben. Es zeigen:

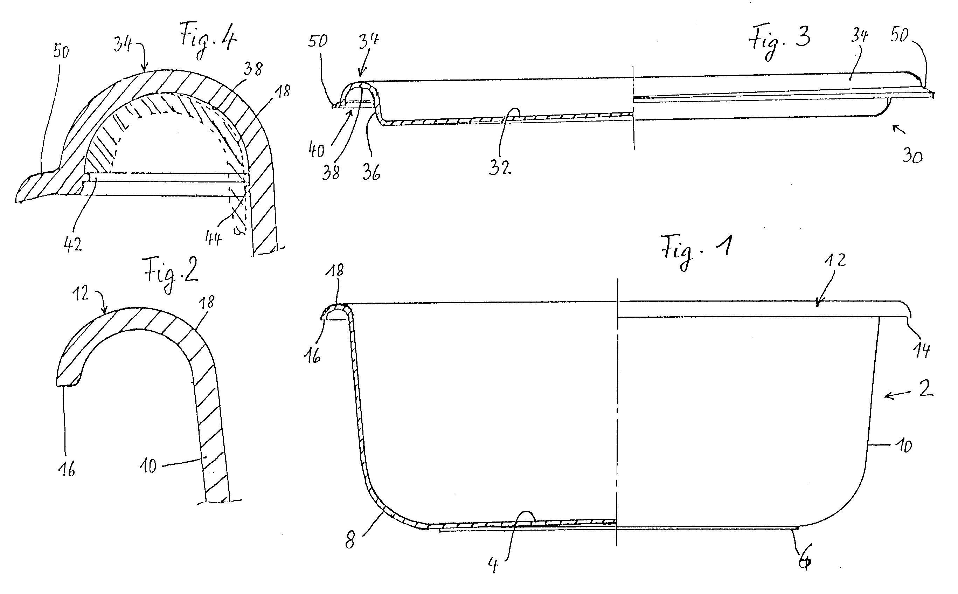

Fig. 1 eine schematische Seitenansicht einer Haushaltsdose, die in der linken Hälfte der Figur vertikal geschnitten ist;

Fig. 2 eine schematische vergrößerte Darstellung eines Vertikalschnitts durch den Dosenrand;

Fig. 3 eine schematische Seitenansicht eines für die Dose nach Fig 1 und 2 geeigneten Deckels, der in dem linken Teil der Figur vertikal geschnitten ist; und

Fig. 4 eine vergrößerte Ansicht eines Vertikalschnittes durch den Randwulst des Deckels.

Die einteilige, aus Polypropylen bestehende Dose 2 besitzt einen im wesentlichen ebenen Boden 4, aus dessen Unterseite eine umlaufende, gegebenenfalls unterbrochene Standleiste 6 vorsteht. Zu den Seiten geht der Boden 4 mit sanfter Wölbung 8 in eine Seitenwand 10 über, welche sich unter einem kleinen Winkel gegen eine Senkrechte zur Standfläche nach außen geneigt erstreckt und insgesamt eben ist. Die Seitenwand 10 geht am oberen Ende in einen umlaufenden im ganzen mit 12 bezeichneten Dosenrand über.

Der Dosenrand 12 ist durch eine im Querschnitt kreisbogenförmig nach außen gewendete Fortsetzung der Seitenwand gebildet, wobei der Winkelbereich, über den sich die Wendung des Dosenrandes 12 erstreckt, in grober Annäherung etwa 160° zur Richtung der Seitenwand 10 beträgt. Das äußere Ende 14 des Dosenrandes 12 weißt jedenfalls im wesentlichen nach unten. Am äußeren Ende 14 ist der Dosenrand 12 im wesentlichen parallel zum Boden 4 abgeschnitten, so daß sich eine Schulter 16 ergibt. Der Krümmungsradius des Dosenrandes 12 ist so bemessen, daß der Dosenrand 12 bequem von Hand erfaßt werden kann. Ferner ist, wie aus den Figuren zu erkennen ist, die Wandstärke des Bodens 4, der Seitenwand 10 sowie des Dosenrandes 12 einheitlich ohne irgendwelche Nuten oder Vorsprünge, so daß sich die Dose nicht nur leicht herstellen, sondern auch leicht sauberhalten läßt.

Der aus gegebenenfalls eingefärbtem Kunststoff bestehende flache Deckel 30 besitzt einen ebenen Mittelteil 32, welcher zum Rand in einen erhabenen, umlaufenden Randwulst 34 übergeht. Der Randwulst 34 weist unmittelbar am Übergang vom Mittelteil 32 zunächst einen relativ ebenen Abschnitt 36 auf, welcher etwa unter dem gleichen Winkel sich nach außen geneigt erstreckt, wie die Seitenwand 10 der Dose. An den Abschnitt 36 anschließend ist der Wulst 34 im Querschnitt kreisbogenförmig in gleichem Ausmaß wie der Dosenrand 12 nach außen und unten gewendet geformt, wobei der Krümmungsradius der Innenfläche 38 der Nut 40 des Randwulstes 34 gleich dem Krümmungsradius der Außenfläche 18 des Dosenrandes 12 ist. Der Randwulst 34 geht nach außen in einen seitlich abstehenden schmalen Steg 50 über, der dann, wenn der Deckel 30 auf die Dose 2 aufgesetzt ist, seitlich über den Dosenrand 12 vorsteht und ein Ergreifen des Deckels 30 zwecks Abnahme von der Dose 2 erleichtert. Nicht dargestellt sind zwei gegenüberliegende seitliche Erweiterungen des Steges 50, die als zusätzliche Handgriffe dienen. Der umlaufende Steg 50 ist, wie dargestellt, leicht nach unten geneigt.

Aus der kreisbogenförmigen Innenfläche 38 der Nut 40 ist an derem äußeren Ende, das heißt also nahe dem Übergang vom Randwulst 34 zum Steg 50, eine umlaufende, horizontale, das heißt etwa auf den Krümmungsmittelpunkt der Innenfläche 38 zuweisende Rippe 42 aus dem Randwulst 34 ausgeformt. Die Ausformung der Rippe 42 ist so angeordnet, daß bei dichtender Auflage des Deckels 30 beziehungsweise dessen Randwulstes 34 auf dem Dosenrand 12 die Rippe 42 unter die Schulter 16 hörbar einrastet und diese untergreift. Damit bleibt der Deckel 30 in dichtendem Verschluß auf der Dose 2 gehalten.

Am inneren Ende der Innenfläche 38 ist etwas unterhalb der Höhe der Rippe 42 eine nach innen, das heißt in Richtung auf den Krümmungsmittelpunkt der Innenfläche 38 gerichtete Verdickung 44 ausgeformt. Bei dichtender Auflage des Deckels 30 auf der Dose 2, wenn also die Rippe 42 die Schulter 16 unterfaßt, liegt die Verdickung 44 an der Innenfläche der Dosenwand 10 in deren Übergangsbereich zum Dosenrand 12 an, so daß etwa die innere Hälfte, das heißt bei der in Fig. 4 gewählten Darstellung die rechte Hälfte des Randwulstes 34 zur benachbarten Oberfläche 18 des Dosenrandes beabstandet ist. Aufgrund der Elastizität des Deckelwerkstoffes wird durch diese Anlage der Verdickung 44 an die Dosenwand 10 der vordere Teil, also gemäß der Darstellung in Fig. 4 der linke Teil des Randwulstes 34 unter Kraftbeaufschlagung gegen den entsprechenden vorderen Teil der Oberfläche 18 des Dosenrandes 12 angepreßt, wodurch sich die Dichtwirkung zwischen der Oberfläche 18 und der Innenfläche 38 verstärkt. In Fig. 4 ist der Verlauf des Dosenrandes 12 in dieser Situation gestrichelt eingetragen.

Die Rippe 42 kann, wie in den Figuren angedeutet, im Randwulst 34 umlaufend und zusammenhängend ausgebildet sein. Es besteht jedoch auch die Möglichkeit, statt einer zusammenhängenden Rippe 42 mehrere einzelne, über den Umfang des Randwulstes verteilte Rippenabschnitte, oder auch über den Umfang des Randwulstes 34 verteilte Nocken vorzusehen, welche bei dichtender Auflage des Deckels 30 auf der Dose 2 hinter der Schulter 16 hörbar einrasten.

Zum Lösen des Deckels 30 von der Dose kann ersterer an der Randleiste 50 oder deren Handgriffen von unten erfaßt und nach oben abgezogen werden, so daß die Rippe 42 unter der Schulter 16 freikommt und der Deckel unschwer abgenommen werden kann.

Es versteht sich, daß die Dose mit Deckel 30 in Draufsicht eine runde, quadratische oder rechteckige Form haben kann, wobei dann die Eckenbereiche abgerundet sind.

## Patentansprüche

1. Haushaltsdose mit Deckel, wobei ein umlaufender Dosenrand von einem umlaufenden, sich aus einem Deckel-Mittelteil erhebenden Deckel-Randwulst übergriffen ist, dadurch gekennzeichnet, daß der Dosenrand (12) relativ zu einer Dosenseitenwand (10) nach außen und unten umgebogen ist und daß der auf dem Dosenrand (12) wenigstens teilweise flächig aufliegende Randwulst (34) an seinem unteren Ende wenigstens eine einwärts vorspringende Rippe (42) oder Nocken aufweist, welche bei dichtendem Verschluß der Dose eine am Dosenrand (12) ausgebildete Schulter (16) unterfassen.

**2.** Haushaltsdose mit Deckel nach Anspruch 1, dadurch gekennzeichnet, daß der Dosenrand (12) sowie der Randwulst (34) im Querschnitt jeweils kreisbogenförmig umgebogen sind, wobei der Krümmungsradius der Oberfläche (18) des Dosenrandes (12) gleich dem Krümmungsradius der Innenfläche (38) des Randwulstes (34) ist.

**3.** Haushaltsdose mit Deckel nach Anspruch 1 oder 2, dadurch gekennzeichnet, daß die Schulter (16) das äußere Ende des Dosenrandes (12) ist, wobei die Rippe (42) am äußeren Ende des Randwulstes (34) ausgebildet ist.

**4.** Haushaltsdose mit Deckel nach einem der vorstehenden Ansprüche, dadurch gekennzeichnet, daß am inneren Ende des Randwulstes (34) eine umlaufende, nach innen vorstehende Verdickung (44) vorgesehen ist.

Fig. 3

Fig. 1

Fig. 4

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-U-8 524 689 (JOKEY-PLASTIC) <br> * Seite 7, Zeile 14 - Zeile 30; Abbildungen 2,3 * <br> --- | 1-4 | B65D43/06 |
| X | GB-A-1 379 246 (DRG PACKAGING) <br> * das ganze Dokument * <br> --- | 1-3 | |
| X <br> A | DE-A-3 243 097 (DATA-LÖSCH) <br> * Seite 8 - Seite 9; Abbildungen 1,2 * <br><br> ----- | 1,3,4 <br> 2 | |
| | | | **RECHERCHIERTE SACHGEBIETE (Int. Cl.5)** <br><br> B65D |

Der vorliegende Recherchenbericht wurde für alle Patentansprüche erstellt

| Recherchenort | Abschlußdatum der Recherche | Prüfer |
|---|---|---|
| DEN HAAG | 19 MAI 1992 | LEONG, C. Y. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)